Europäisches Patentamt

European Patent Office

Office européen des brevets

(11) Numéro de publication: **0 173 342 B1**

# (12) FASCICULE DE BREVET EUROPEEN

(45) Date de publication de fascicule du brevet:
03.07.91

(51) Int. Cl.⁵: **C09J 5/04**

(21) Numéro de dépôt: 85110958.7

(22) Date de dépôt: 30.08.85

(54) **Procédé pour l'assemblage d'éléments en bois.**

(30) Priorité: 31.08.84 US 646444

(43) Date de publication de la demande:
05.03.86 Bulletin 86/10

(45) Mention de la délivrance du brevet:
03.07.91 Bulletin 91/27

(84) Etats contractants désignés:
AT BE CH DE FR GB IT LI NL SE

(56) Documents cités:
EP-A- 0 091 769
FR-A- 1 056 171

(73) Titulaire: **INTEROX AMERICA**
**3333 Richmond Avenue**
**Houston Texas 77098(US)**

(72) Inventeur: **Dodson, Michael G.**
**8419 Oakwood Drive**
**Magnolia Texas 77355(US)**
Inventeur: **Presley, John Richard**
**1914 Wycliffe**
**Houston Texas 77043(US)**

(74) Mandataire: **Lederer, Franz, Dr.**
**Lederer, Keller & Riederer Patentanwälte**
**Lucile-Grahn-Strasse 22**
**W-8000 München 80(DE)**

## Description

La présente invention a pour objet un procédé pour l'assemblage d'éléments en bois par collage. Elle concerne plus particulièrement un procédé selon lequel on enduit les éléments en bois avec une colle comprenant une résine thermodurcissable contenant du formaldéhyde et on comprime ensuite les éléments les uns contre les autres en chauffant pour faire prendre la colle.

La présence de formaldéhyde libre dans les objets formés d'éléments en bois assemblés constitue une source de désagréments importants lorsque ces objets sont destinés à être employés ou entreposés à l'intérieur des bâtiments. Le formaldéhyde libre se volatilise en effet dans l'atmosphère et y répand des odeurs persistantes toxiques qui irritent les muqueuses des yeux, du nez et de la gorge.

On a proposé d'épurer les produits assemblés en bois par condensation du formaldéhyde libre au moyen de réactifs tels que le résorcinol, l'urée ou l'ammoniac. Aucun d'entre eux n'a cependant donné satisfaction étant donné la réversibilité de la réaction de condensation avec le formaldéhyde. De plus, l'urée provoque une diminution de l'efficacité adhésive de la résine. Le résorcinol s'est avéré d'un coût prohibitif et l'ammoniac nécessite des investissements importants pour sa mise en oeuvre et expose en outre les ouvriers aux dangers inhérents à sa manipulation.

Dans le brevet tchécoslovaque 192 269 on propose de faire réagir le formaldéhyde libre présent dans les solutions aqueuses de résine destinées à coller le bois avec une solution de peroxyde d'hydrogène dans le but de réduire la teneur en formaldéhyde dans l'air ambiant des installations de fabrication des objets agglomérés.

Dans la demande de brevet japonais 49/25 108 on décrit un procédé consistant à ajouter un peroxyde inorganique à la résine à base de formaldéhyde pour supprimer l'odeur de formaldéhyde des panneaux de bois contreplaqués. Dans ces procédés connus, on fait réagir le peroxyde avec la résine avant d'en enduire les éléments de bois à assembler. Ils présentent l'inconvénient de réduire fortement la cohésion des éléments assemblés par rapport à ceux produits avec une résine non traitée au peroxyde.

L'invention vise à remédier à cet inconvénient en fournissant un procédé pour l'assemblage d'éléments en bois au moyen d'une colle comprenant une résine thermodurcissable contenant du formaldéhyde, dans lequel on évite ou on réduit de manière significative l'émission de vapeurs de formaldéhyde par les éléments assemblés, sans nuire à la cohésion de l'assemblage.

L'invention concerne à cet effet un procédé pour l'assemblage d'au moins deux éléments en bois dans lequel on enduit d'abord les éléments avec une colle comprenant une résine thermodurcissable contenant du formaldéhyde, on traite ensuite la colle avec un peroxyde puis on comprime les éléments les uns contre les autres en chauffant.

Dans le procédé selon l'invention, la forme des éléments en bois et leur nombre ne sont pas critiques. Ceux-ci peuvent par exemple être à l'état de blocs massifs, de planches, de feuilles ou de particules telles que des copeaux, des fibres ou de la sciure. La nature du bois n'est pas critique non plus, celui-ci pouvant être indifféremment du bois de résineux ou du bois de feuillus.

Dans le procédé selon l'invention, la résine thermodurcissable contenant du formaldéhyde peut être toute résine obtenue par la technique de la polycondensation, dans laquelle un des constituants monomères est le formaldéhyde, telle que, par exemple, les résines urée-formol, thiourée-formol, éthylèneurée-formol, mélamine-formol, benzoguanamine-formol, acétoguanamine-formol, aniline-formol, phénol-formol et arènesulfonamide-formol (par exemple la résine p-toluènesulfonamide-formol) ou les mélanges de deux ou plusieurs de ces résines.

La résine peut avantageusement être mise en oeuvre à l'état précondensé en solution aqueuse.

Outre la résine, la colle peut éventuellement contenir des additifs destinés à renforcer la cohésion de l'assemblage ou à lui conférer des propriétés particulières. Des additifs communément utilisés sont des agents hydrophobes tels que des cires de paraffine, des fongicides et des insecticides, notamment le pentachlorophénol, des agents ignifuges (comme les phosphates et les sulfates d'ammonium, l'acide borique et le borax) et des catalyseurs à réaction acide, de préférence le chlorure d'ammonium, dont la fonction est d'accélérer la condensation de la résine.

Des colles qui conviennent bien dans le cadre de l'invention sont celles formées d'une solution aqueuse de résine contenant de 30 à 80 % en poids de matières sèches, de préférence 50 à 65 % en quantité telle qu'après enduction des éléments en bois avec la solution, les matières sèches de la résine représentent 1 à 10 % du poids de matière sèche des éléments en bois mis en oeuvre, de préférence 4 à 8 % de ce poids.

De plus, on peut appliquer séparément ou mélanger à la solution de résine une émulsion de cire de paraffine contenant de 30 à 80 % en poids de matières sèches, de préférence 50 à 65 % en quantité telle qu'après enduction des éléments en bois, la matière sèche de la cire représente 0 à 1 % du poids de

EP 0 173 342 B1

matière sèche des éléments en bois mis en oeuvre, de préférence 0,5 à 0,9 % de ce poids.

Toute technique appropriée peut être mise en oeuvre pour enduire les éléments en bois avec la colle et la cire. Dans le cas où les éléments en bois sont à l'état de particules, l'enduction peut être opérée dans des mélangeurs à palettes ou à cylindres ou par vaporisation. La quantité optimum de colle à mettre en oeuvre dépend de divers facteurs, notamment de la nature de la résine, de la composition de la colle, de la forme et des dimensions des éléments en bois et de la nature du bois. Elle doit être déterminée dans chaque cas particulier.

Selon l'invention, après avoir enduit les éléments en bois avec la colle, on traite celle-ci avec un peroxyde. Par peroxyde, on entend désigner tout peroxyde inorganique ou organique capable d'oxyder le formaldéhyde en acide formique. Des exemples de peroxydes utilisables dans le cadre de l'invention sont le peroxyde d'hydrogène, les peroxydes métalliques et plus particulièrement les peroxydes de métaux alcalins ou alcalino-terreux tels que le peroxyde de sodium, les persels inorganiques tels que les perborates, les percarbonates et les persulfates, les peracides inorganiques tels que l'acide persulfurique, les peracides organiques, plus particulièrement ceux contenant de 2 à 7 atomes de carbone tels que les acides peracétique et perpropionique ainsi que leurs sels et les hydroperoxydes et peroxydes organiques. De bons résultats ont été obtenus avec le peroxyde d'hydrogène. On peut mettre en oeuvre un ou plusieurs peroxydes de mêmes types ou de types différents.

Le traitement avec le peroxyde peut être opéré par toute technique adéquate, capable de disperser le peroxyde de manière sensiblement homogène sur la colle enduisant les éléments en bois. On peut avantageusement faire usage d'une technique d'enduction par vaporisation ; dans le cas de particules de bois, on peut également faire usage d'un mélangeur mécanique.

La quantité de peroxyde à mettre en oeuvre doit être suffisante pour éliminer la majeure partie et, de préférence, la totalité du formaldéhyde libre de la colle enduisant les éléments en bois. Elle doit être déterminée dans chaque cas particulier. On obtient généralement de bons résultats avec une quantité de peroxyde d'hydrogène comprise entre 0,1 et 1 % du poids de bois sec, de préférence entre 0,25 et 0,6 % de ce poids.

La compression des éléments en bois est opérée à chaud, et elle a pour fonction de conférer la forme requise à l'assemblage et de provoquer la prise et le durcissement de la résine. Elle peut par exemple être opérée dans une presse à plateaux ou à cylindres chauffés. La température et la pression de travail dépendent de la nature de la résine et, éventuellement, des autres constituants de la colle. On obtient habituellement de bons résultats avec une pression comprise entre 2,07 et 3,45 MPa, une température comprise entre 93,3 et 232,2° C et un temps de compression compris entre 100 et 500 s.

Après la compression, l'assemblage est refroidi, par exemple dans l'air ambiant. Il peut ensuite être soumis à un traitement de finition, tel qu'un ébarbage par exemple.

Le procédé selon l'invention s'applique à la fabrication de tout type d'assemblage en bois par collage tels que les panneaux structurés (structural panels) comprenant les contre-plaqués, les placages de bois, les panneaux de particules et de fibres de bois, les pièces de charpente contre-collées, les structures constituées de bois et de contre-plaqué, les poutres et profilés à âme de contre-plaqué.

Le procédé selon l'invention s'applique en particulier à la fabrication de panneaux en particules de bois agglomérées par collage au moyen d'une résine urée-formaldéhyde ou d'un mélange de résine urée-formaldéhyde avec une autre résine contenant du formaldéhyde. Les particules de bois utilisées dans cette application particulière du procédé selon l'invention peuvent être des fibres de bois ou toutes autres particules de bois, telles que par exemple :

- des éclats de bois fabriqués spécialement par passage des rondins dans une hacheuse à disque, à cylindre ou centrifuge et ayant une épaisseur allant de 0,254 à 0,762 mm et une longueur moyenne d'environ 25,4 mm;
- des copeaux de raboteuse et de planeuse souvent soumis à un traitement mécanique pour réduire leur dimension et éliminer leur tendance à boucler ;
- des échardes obtenues sans hachage par un traitement de martèlement et d'écrasement du bois ;
- de la sciure de bois employée de préférence en mélange avec des éclats de bois.

Dans une forme de réalisation particulière du procédé selon l'invention mettant en oeuvre des éléments en bois humide, on soumet ceux-ci à un séchage préalable avant de les enduire avec la colle. Le séchage est de préférence réglé de telle sorte qu'après l'enduction avec la colle et le traitement avec le peroxyde, la teneur en humidité des éléments en bois n'excède pas 12 % en poids, de préférence 10 %.

Dans une autre forme de réalisation particulière du procédé selon l'invention, appliquée à l'assemblage de particules en bois, on répartit d'abord les particules en plusieurs classes distinctes en fonction de leurs dimensions granulométriques, on traite séparément chaque classe de particules avec la colle puis le peroxyde d'hydrogène, on forme ensuite un gâteau par superposition des classes de particules et on

3

comprime le gâteau en chauffant. Dans cette forme de réalisation du procédé selon l'invention, la superposition des particules dans le gâteau peut être agencée de manière que celui-ci comprenne une âme en particules de dimensions grossières, prise en sandwich entre des couches en particules de dimensions plus fines.

L'intérêt de l'invention va apparaître à la lecture des exemples comparatifs suivants.

Dans chacun des exemples, on a fabriqué des panneaux par agglomération de particules en bois. A cet effet, on a mis en oeuvre des particules présentant la classification granulométrique suivante (selon la dénomination ASTM standard) : 45 % en poids de taille supérieure à 1 mm (refusées au tamis n° 18) 22 % en poids de taille inférieure à 1 mm mais supérieure à 0,595 mm (passant au tamis n° 18 mais refusées au tamis n° 30) 22 % en poids de taille inférieure à 0,595 mm mais supérieure à 0,250 mm (passant au tamis n° 30 mais refusées au tamis n° 60) 11 % en poids de taille inférieure à 0,250 mm (passant au tamis n° 60)

Les particules ont été mélangées avec une colle pour les encoller, puis on a formé un gâteau et on a comprimé les particules enduites de colle dans une presse, sous une pression variant de 1,46 à 2,93 MPa, à une température de 171,1° C.

Première série d'exemples

Exemple 1R (de référence)

On a mis en oeuvre dans un mélangeur à tambour des copeaux de bois sur lesquels on a vaporisé une colle composée d'une résine urée - formaldéhyde et de cire de paraffine en quantité telle que la teneur en résine se montait à 7 % du poids de matières sèches des copeaux de bois et la teneur en cire à 0,75 % de ce même poids. On a formé un gâteau avec les copeaux enduits de colle en utilisant des moules en aluminium. La teneur en humidité du gâteau de copeaux était de 10 %. On a introduit le gâteau entre les moules dans une presse hydraulique où on l'a pressé dans les conditions décrites plus haut.

Exemple 2 (selon l'art antérieur)

On a procédé de même pour un deuxième panneau où en outre on a, selon l'art antérieur, mélangé une solution de peroxyde d'hydrogène à 5 % en poids à la colle avant d'en enduire les copeaux. La quantité de peroxyde d'hydrogène mise en oeuvre s'est élevée à 0,286 % du poids de bois sec.

Les mesures de la cohésion interne et du taux d'émission de formaldéhyde sont donnés au tableau 1, où IB désigne la cohésion interne de l'assemblage mesurée suivant la norme ASTM D1037 tandis que l'émission de HCHO dénote l'émission de formaldéhyde mesurée suivant le test FTM-1 (two-hour dessicator test) normalisé conjointement par les
- National Particleboard Association
  2306 Perkins Place
  Silver Spring, Maryland 20910 USA
- Hardwood Plywood Manufacturers Association
  1825 Michael Faraday Drive
  Reston, Virginia 22090 USA
- Formaldehyde Institute
  1075 Central Park Avenue
  Scarsdale, New-York 10583 USA

TABLEAU 1

| Exemple N° | Taux $H_2O_2$ (%) | IB (MPa) | Emission de HCHO ($\mu g/ml$) |
|---|---|---|---|
| 1R | 0 | 0,889 | 1,99 |
| 2 | 0,286 | 0,676 | 0,99 |

La comparaison des résultats obtenus aux exemples 2 et 1R montre que la réduction de 50 % du taux d'émission du formaldéhyde par l'addition de peroxyde d'hydrogène n'a pu être obtenu qu'au prix d'une dégradation des propriétés physiques des panneaux fabriqués.

Deuxième série d'exemples

Exemple 3R (de référence)

On a préparé des panneaux selon une technique semblable à celle de l'exemple 1R sans faire usage de peroxyde d'hydrogène et on a mesuré leur cohésion interne et leur taux d'émission de formaldéhyde comme définis plus haut.

Exemples 4, 5 et 6 (selon l'invention)

On a répété toutes les conditions de l'essai de l'exemple 3R, mais, en plus, après avoir encollé les copeaux de bois, on les a traités avec du peroxyde d'hydrogène vaporisé dans un second mélangeur. La quantité de peroxyde d'hydrogène mise en oeuvre a été réglée de telle sorte que la teneur en humidité du gâteau de copeaux s'est élevée à 8 % en poids pour l'exemple 6 et à environ 10 % pour les exemples 4 et 5. A l'issue de l'essai, on a également mesuré la cohésion interne comme à l'exemple 3R. On a en outre mesuré le taux d'émission de formaldéhyde selon la norme FTM-1.

Les résultats des essais des exemples 3R et 4 à 6 sont consignés au tableau 2.

TABLEAU 2

| Exemple N° | Taux $H_2O_2$ (%) | IB (MPa) | Emission de HCHO ($\mu g/ml$) |
|---|---|---|---|
| 3R | 0 | 0,772 | 2,13 |
| 4 | 0,114 | 0,786 | 1,71 |
| 5 | 0,143 | 0,807 | 1,61 |
| 6 | 0,286 | 0,793 | 0,97 |

On voit que l'application du peroxyde de la manière conforme à l'invention permet de réduire de plus de 50 % le taux d'émission de formaldéhyde sans affecter les propriétés physiques des panneaux.

EP 0 173 342 B1

**Revendications**

1. Procédé pour l'assemblage d'au moins deux éléments en bois au moyen d'une colle comprenant une résine thermodurcissable contenant du formaldéhyde selon lequel on traite la colle avec un peroxyde et on comprime les éléments les uns contre les autres en chauffant, caractérisé en ce qu'on enduit d'abord les éléments avec la colle, on traite ensuite la colle avec le peroxyde puis on comprime les éléments.

2. Procédé selon la revendication 1 caractérisé en ce que le peroxyde est du peroxyde d'hydrogène.

3. Procédé selon l'une quelconque des revendications 1 et 2, caractérisé en ce que les éléments en bois sont des particules que l'on comprime pour former un panneau.

4. Procédé selon l'une quelconque des revendications 1 à 3, caractérisé en ce que les particules sont des copeaux de bois.

5. Procédé selon l'une quelconque des revendications 1 à 4, caractérisé en ce qu'on classe les particules en plusieurs classes granulométriques distinctes, on enduit chaque classe séparément avec la résine puis on traite avec le peroxyde, on forme un gâteau par superposition des classes de particules puis on comprime le gâteau dans une presse chauffée.

6. Procédé selon l'une quelconque des revendications 1 à 5, caractérisé en ce que le peroxyde est appliqué par vaporisation sur les éléments de bois enduits de résine.

7. Procédé selon l'une quelconque des revendications 1 à 6, caractérisé en ce que la résine thermodurcissable est un résine pré-condensée à base d'urée-formol et est mise en oeuvre à l'état d'une solution aqueuse.

8. Procédé selon l'une quelconque des revendications 1 à 7, caractérisé en ce que la colle comprend des cires de paraffine et un catalyseur pour la résine constitué de chlorure d'ammonium.

9. Procédé selon l'une quelconque des revendications 1 à 8, caractérisé en ce que la colle est formée d'une solution de résine contenant de 30 à 80 % en poids de solides mise en oeuvre en quantité telle qu'après enduction des éléments en bois avec ladite solution, les matières sèches de la résine représentent 1 à 10 % du poids en matières sèches des éléments en bois utilisés.

10. Procédé selon l'une quelconque des revendications 1 à 9, caractérisé en ce qu'on met en oeuvre une émulsion de cire de paraffine contenant entre 30 et 80 % en poids de matière sèche en quantité réglée pour qu'après l'enduction des éléments en bois avec la cire, les matières sèches de la cire représentent 0 à 1,0 % du poids des matières sèches des éléments en bois.

11. Procédé selon l'une quelconque des revendications 1 à 10 caractérisé en ce que la quantité de peroxyde mise en oeuvre est comprise entre 0,1 et 1 % du poids de matières sèches des éléments en bois.

**Claims**

1. A process of assembling at least 2 wooden elements by means of a glue comprising a thermocurable resin containing formaldehyde, according to which the glue is treated with a peroxide and the elements are pressed against each other while heated, characterized in that the elements first are coated with the glue, afterwards the glue is treated with the peroxide and then the elements are pressed.

2. A process according to claim 1, characterised in that the peroxide is hydrogen peroxide.

3. A process according to one of the claims 1 and 2, characterized in that the wooden elements are particles which are pressed to form a board.

4. A process according to any one of claims 1 to 3, characterised in that the particles are wood chips.

6

5. A process according to any one of claims 1 to 4, characterised in that the particles are classified into several certain grain size classes, each class is separately coated with the resin, then treated with the peroxide, a cake is formed by stacking the particle classes, then the cake is pressed in a heated press.

6. A process according to any one of claims 1 to 5, characterised in that the peroxide is applied by evaporation on the wooden elements coated with resin.

7. A process according to any one of claims 1 to 6, characterised in that the thermocurable resin is a precondensed resin based on urea-formol and is applied in the state of an aqueous solution.

8. A process according to any one of claims 1 to 7, characterised in that the glue comprises paraffin waxes and a catalyst for the resin constituted by ammonium chloride.

9. A process according to any one of claims 1 to 8, characterised in that the glue is produced of a solution of resin, containing 30 to 80 % by weight of the solid matter used in such quantity that after the coating of the wooden elements with said solution the dry matters of the resin constitute 1 to 10 % by weight of the dry matters of the wooden elements used.

10. A process according to any one of claims 1 to 9, characterised in that an emulsion of paraffin wax is applied containing between 30 and 80 % by weight of dry matter in a quantity determined so that after the coating of the wooden elements with the wax the dry matters of the wax constitute 0 to 1.0 % by weight of the dry matters of the wooden elements.

11. A process according to any one of claims 1 to 10, characterised in that the quantity of the peroxide used is comprised between 0.1 and 1 % by weight of the dry matters of the wooden elements.

## Ansprüche

1. Verfahren zum Zusammenfügen von mindestens zwei Holzelementen mit Hilfe eines Leimes umfassend ein unter Wärme aushärtbares Harz enthaltend Formaldehyd gemäß dem der Leim mit einem Peroxid behandelt wird und die Elemente aneinandergepreßt und dabei erwärmt werden, dadurch gekennzeichnet, daß die Elemente zuerst mit dem Leim bestrichen werden, der Leim danach mit dem Peroxid behandelt wird und dann die Elemente gepreßt werden.

2. Verfahren nach Anspruch 1, dadurch gekennzeichnet, daß das Peroxid ein Wasserstoffperoxid ist.

3. Verfahren nach einem der Ansprüche 1 und 2, dadurch gekennzeichnet, daß die Holzelemente Partikel sind, die gepreßt werden um eine Platte zu bilden.

4. Verfahren nach einem der Ansprüche 1 bis 3, dadurch gekennzeichnet, daß die Partikel Holzspäne sind.

5. Verfahren nach einem der Ansprüche 1 bis 4, dadurch gekennzeichnet, daß die Partikel nach mehreren bestimmten Korngrößenklassen eingeteilt werden, jede Klasse separat mit dem Harz bestrichen wird, dann mit dem Peroxid behandelt wird, ein Kuchen gebildet wird durch übereinanderschichten der Partikelklassen, dann der Kuchen in einer Wärmepresse gepreßt wird.

6. Verfahren nach einem der Ansprüche 1 bis 5, dadurch gekennzeichnet, daß das Peroxid angewendet wird durch Verdampfen auf die mit Harz bestrichenen Holzelemente.

7. Verfahren nach einem der Ansprüche 1 bis 6, dadurch gekennzeichnet, daß das unter Wärme aushärtbare Harz ein vorkondensiertes Harz auf der Basis von Harnstoff-Formol ist und im Zustand einer wäßrigen Lösung verwendet wird.

8. Verfahren nach einem der Ansprüche 1 bis 7, dadurch gekennzeichnet, daß der Leim Paraffinwachse und einen Katalysator für das Harz dargestellt durch Ammoniumchlorid umfaßt.

9. Verfahren nach einem der Ansprüche 1 bis 8, dadurch gekennzeichnet, daß der Leim hergestellt ist aus

7

EP 0 173 342 B1

einer Lösung aus Harz, enthaltend 30 bis 80 Gewichts-% der eingesetzten Feststoffe in einer solchen Menge, daß nach dem Bestreichen der Holzelemente mit dieser Lösung die trockene Substanzen des Harzes 1 bis 10 Gewichts-% der trockenen Substanzen der verwendeten Holzelemente ausmachen.

10. Verfahren nach einem der Ansprüche 1 bis 9, dadurch gekennzeichnet, daß eine Emulsion von Paraffinwachs verwendet wird, enthaltend zwischen 30 und 80 Gewichts-% der trockenen Substanz in einer so festgelegten Menge, daß nach dem Bestreichen der Holzelemente mit dem Wachs die trockenen Substanzen des Wachses 0 bis 1,0 Gewichts-% der trockenen Substanzen der Holzelemente ausmachen.

11. Verfahren nach einem der Ansprüche 1 bis 10, dadurch gekennzeichnet, daß die Menge des eingesetzten Peroxids zwischen 0,1 und 1 Gewichts-% der trockenen Substanzen der Holzelemente umfaßt.